Europäisches Patentamt

European Patent Office

Office européen des brevets

(19)

(11) Veröffentlichungsnummer: **0 325 732 B1**

## (12) EUROPÄISCHE PATENTSCHRIFT

(45) Veröffentlichungstag der Patentschrift:
11.09.91 Patentblatt 91/37

(51) Int. Cl.⁵: **F16K 51/00, F16L 55/12, B65D 59/02**

(21) Anmeldenummer: **88119943.4**

(22) Anmeldetag: **30.11.88**

(54) Stopfen zum Verschliessen und Abdichten einer zylindrischen Bohrung in einem Gehäuse.

(30) Priorität: **28.01.88 CH 304/88**

(43) Veröffentlichungstag der Anmeldung:
**02.08.89 Patentblatt 89/31**

(45) Bekanntmachung des Hinweises auf die Patenterteilung:
**11.09.91 Patentblatt 91/37**

(84) Benannte Vertragsstaaten:
**AT BE CH DE ES FR GB IT LI NL SE**

(56) Entgegenhaltungen:
CH-A- 508 828
DE-A- 2 845 072
DE-A- 3 031 932
US-A- 1 615 316

(56) Entgegenhaltungen:
US-A- 3 387 735
US-A- 3 900 122
US-A- 3 952 395
US-A- 4 453 618

(73) Patentinhaber: Oerlikon-Knorr
Eisenbahntechnik AG
Birchstrasse 155
CH-8050 Zürich (CH)

(72) Erfinder: Epp, Niklaus
Friedackerstrasse 11
CH-8153 Rümlang (CH)

(74) Vertreter: Hunziker, Kurt
c/o Werkzeugmaschinenfabrik
Oerlikon-Bührle AG Birchstrasse 155
CH-8050 Zürich (CH)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 325 732 B1

## Beschreibung

Die Erfindung betrifft einen Stopfen, insbesondere Stahlstopfen, zum Verschliessen und Abdichten einer zylindrischen Bohrung in einem Leichtmetall-Gehäuse, insbesondere einem Ventilgehäuse für Bremsen, wobei der Stopfen eine grössere Härte als das Gehäuse aufweist.

Bei einer bekannten Anordnung dieser Art (siehe DE-A-3031932), bestehend aus einem mit einem Gehäuse zusammen wirkenden Stopfen, weist der Stopfen eine grössere Härte als das Gehäuse auf. Ferner weist der Stopfen einen ersten und einen zweiten Bereich mit einem entsprechenden ersten und zweiten Umfang auf, wobei der zweite Umfang grösser ist als der erste Umfang. Zwischen den beiden Bereichen befindet sich eine Umfangsnut, in welche beim Einsetzen des Stopfens mit seinem ersten Bereich in das Gehäuse bis zum Anschlag des zweiten Bereiches ein Teil des Gehäuses eingreift.

Diese bekannte Anordnung hat den Nachteil, dass sowohl bei der Bohrung des Gehäuses als auch beim Stopfen selber sehr genaue Toleranzen eingehalten werden müssen, damit der Stopfen zuverlässig abdichtet und nicht herausfällt.

Die Aufgabe, welche mit der vorliegenden Erfindung gelöst werden soll, besteht in der Schaffung einer Anordnung, bei der keine genauen Toleranzen für Bohrung und Stopfen erforderlich sind.

Der erfindungsgemässe Stopfen zum Verschliessen und Abdichten einer zylindrischen Bohrung in einem Gehäuse, mit dem diese Aufgabe gelöst wird, ist dadurch gekennzeichnet, dass sich der Stopfen nach beiden Enden hin kegelförmig verjüngt und im mittleren Bereich an seinem Umfang eine Kante aufweist, welche in die Wand der Bohrung eindringt und diese plastisch deformiert, wobei der Stopfen eine Zentrierbohrung aufweist.

Es sind zwar bereits Behälter bekannt (siehe US-A-3 900122), insbesondere kleine Glasflaschen zum Aufbewahren von Tabletten oder dergleichen. Dieser Behälter weist einen Stopfen auf, der in der zylindrischen Oeffnung des Behälters eingesetzt werden kann. Dieser Stopfen weist einen elastischen Teil auf, der sich zuerst konisch gegen den Behälter erweitert und anschliessend konisch verjüngt. Dieser elastische Teil des Stopfens wirkt mit einer ringförmigen Rippe an der Innenwand der Flasche zusammen. Der Stopfen liegt mit seinem sich konisch gegen den Behälter erweiternden Teil an dieser Rippe an, wenn sich der Stopfen in seiner Schliessstellung befindet.

Aus der US-A-3952395 ist bereits ein Stopfen bekannt zum Verschließen und Abdichten einer zylindrischen Bohrung in einen Leichtmetallgehäuse, wobei der Stopfen eine größere Härte als das Gehäuse aufweist; der Stopfen ist Kugelförmig und der mittlere Bereich der Kugel dringt in die Wand der Bohrung ein und deformiert diese plastisch.

Zwei Ausführungsbeispiele des erfindungsgemässen Stopfens sind im folgenden anhand der beigefügten Zeichnung ausführlich beschrieben. Es zeigt :

Fig. 1    ein erstes Ausführungsbeispiel und

Fig. 2    ein zweites Ausführungsbeispiel des erfindungsgemässen Stopfens in einer Gehäusebohrung teilweise in Ansicht und teilweise im Schnitt.

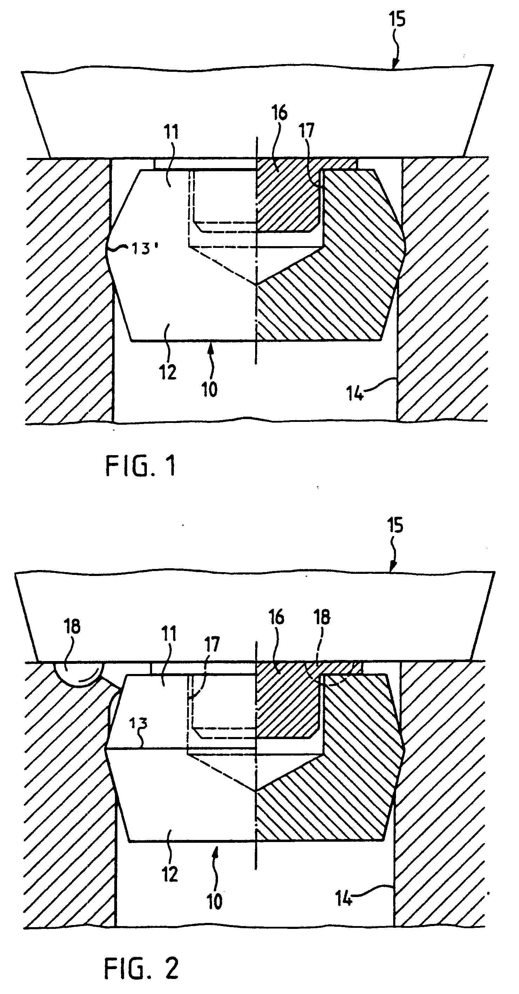

Gemäss Fig.1 und 2 besteht der Stopfen 10 aus einem ersten konischen Teil 11, der sich gegen das eine Ende des Stopfens 10 verjüngt, und aus einem zweiten konischen Teil 12, der sich gegen das andere Ende des Stopfens 10 verjüngt. Im mittleren Bereich weist der Stopfen 10 entweder eine scharfe Kante 13 auf (Fig. 2), welche die Schnittkante der kegeligen Flächen der beiden Teile 11 und 12 bildet, oder der Uebergang von der einen kegeligen Fläche zur anderen kegeligen Fläche ist durch einen Radius 13' abgerundet.

Vorzugsweise ist der erste konische Teil 11 etwas kürzer als der zweite konische Teil 12. Dieser Stopfen 10 befindet sich in einer Bohrung 14 eines nicht näher dargestellten Gehäuses. Vorzugsweise wird ein Stopfen 10 aus Stahl in eine Bohrung 14 eines Leichtmetallgehäuses, insbesondere Aluminium, hineingepresst, und die Wand der Bohrung 14 wird plastisch deformiert. Zum Einsetzen des Stopfens 10 in die Bohrung 14 wird ein Werkzeug 15 verwendet, das einen Bolzen 16 aufweist, der in eine Bohrung 17 des Stopfens 10 hineinragt. Der Bolzen 16 des Werkzeuges 15 gewährleistet, dass der Stopfen 10 sich in der Bohrung 14 nicht schräg stellen kann. Die Kante 13 gewährleistet eine zuverlässige Verankerung und Abdichtung des Stopfens 10 in der Bohrung 14 des Leichtmetallgehäuses.

Die Ausbildung des Stopfens 10 mit einer verhältnismässig scharfen Kante 13 an seinem Umfang hat den Vorteil, dass die Bohrung 14 nicht präzise toleriert werden muss und auch keine präzise Oberflächenbearbeitung erfordert. Es genügt, die Bohrung mit einem Bohrer auszubohren, ohne jegliche Nachbearbeitung durch Fräsen oder dergleichen.

Die Wand der Bohrung 14 wird durch die Kante 13 des Stopfens 10 geglättet, sodass eine Dichtfläche an dieser Bohrungswand entsteht. Zum Sichern des Stopfens 10 in der Bohrung 14 sind am Werkzeug 15 drei bis vier Nocken 18 vorhanden, mit denen der Stopfen 10 in der Bohrung 14 verstemmt wird.

2

Beim ersten Ausführungsbeispiel gemäss Fig. 1 ist auf eine Sicherung des Stopfens 10 in der Bohrung 14 durch Verstemmen mit Hilfe von Nocken 18 verzichtet worden. Die scharfe Kante 13 gemäss Fig. 2 ist gemäss Fig. 1 durch eine Abrundung ersetzt worden.

## Patentansprüche

1. Stopfen, insbesondere Stahlstopfen, zum Verschliessen und Abdichten einer zylindrischen Bohrung (14) in einem Leichtmetallgehäuse, insbesondere einem Ventilgehäuse für Bremsen, wobei der Stopfen (10) eine grössere Härte als das Gehäuse aufweist, dadurch gekennzeichnet, dass sich der Stopfen (10) nach beiden Enden hin kegelförmig verjüngt sowie im mittleren Bereich an seinem Umfang eine Kante (13, 13') aufweist, welche in die Wand der Bohrung eindringt und diese plastisch deformiert, wobei der Stopfen eine Zentrierbohrung (17) aufweist.

2. Stopfen nach Anspruch 1, dadurch gekennzeichnet, dass der Stopfen (10) durch Nocken (18) in der Wand der Bohrung verstemmt ist.

## Claims

1. Plug, in particular a steel plug, for closing and sealing a cylindrical bore (14) in a light-metal housing, in particular a valve housing for brakes, whereby the plug (10) is of greater hardness than the housing, **characterised in that** the plug (10) conically narrows towards both ends, and in that it comprises an edge (13, 13') at its periphery in the middle area, which enters into the wall of the bore and plastically deforms same, whereby the plug is provided with a centre bore (17).

2. Plug according to claim 1, **characterised in that** the plug (10) is caulked into the wall of the bore by cams (18).

## Revendications

1. Bouchon, en particulier bouchon en acier, pour fermer et rendre étanche un alésage cylindrique (14) dans un corps en métal léger, en particulier un corps de soupape pour freins, le bouchon comportant une dureté plus grande que le corps, caractérisé en ce que le bouchon s'amincit vers les deux extrémités en forme de cône, et comporte dans sa zone moyenne, sur son pourtour, une arête (13, 13') qui pénètre dans la paroi de l'alésage et déforme celle-ci plastiquement, le bouchon comportant un alésage central (17).

2. Bouchon selon la revendication 1, caractérisé en ce que le bouchon est fixé dans la paroi de l'alésage par des ergots (18).

FIG. 1

FIG. 2